# EUROPÄISCHE PATENTSCHRIFT

(11) **EP 2 834 341 B1**
(45) Veröffentlichungstag und Bekanntmachung des Hinweises auf die Patenterteilung: **27.04.2016**
(21) Anmeldenummer: 12791483.6
(22) Anmeldetag: 27.11.2012
(51) Int. Cl.: C11D 17/00, C11D 17/06, A47K 17/00, A47L 13/17, B29C 47/00, B29C 47/06, C11D 17/04, B29K 105/00, B29L 9/00, E03D 9/02

(54) **STREIFENFÖRMIGES WC-REINIGUNGSPRODUKT**
STRIP-FORM WC CLEANING PRODUCT
PRODUIT DE NETTOYAGE DE WC EN FORME DE BANDE

(30) Priorität: 04.04.2012 DE 102012205512; 04.09.2012 DE 102012215615
(43) Veröffentlichungstag der Anmeldung: 11.02.2015
(73) Patentinhaber: Henkel AG & Co. KGaA, 40589 Düsseldorf (DE)
(72) Erfinder: HOCHKUGLER, Sabine, A-1230 Wien (AT); REICHERT, Christian, 40476 Düsseldorf (DE); CAPPLEMAN, Robert-Stephen, 47269 Duisburg (DE); HORN, Michael, Düsseldorf 40470 (DE); EBRAHIMZADEH, Keiwan, 40589 Düsseldorf (DE); PLANTIKOW, Petra, 40627 Düsseldorf (DE); SCHIEDEL, Marc-Steffen, 40789 Monheim (DE)
(86) Internationale Anmeldenummer: PCT/EP2012/073662
(87) Internationale Veröffentlichungsnummer: WO 2013/149686

(56) Entgegenhaltungen:
- EP-A1- 1 229 106
- WO-A1-2006/013321
- US-A- 4 683 072
- US-A1- 2008 190 457

## Beschreibung

Die Erfindung betrifft ein mehrphasiges, streifenförmiges WC-Reinigungsprodukt zur Applikation im Inneren eines Toilettenbeckens sowie ein Verfahren zur Herstellung des streifenförmigen WC-Reinigungsprodukts.

### Stand der Technik

Stückige WC-Reinigungsmittel werden bereits seit langem in der WC-Schüssel unter dem Beckenrand (sogenannte Rimblocks) sowie im Wasserkasten (Intank-Blocks oder cistern blocks) eingesetzt. Die Formulierungen enthalten in der Regel Tenside, Desinfektions- und Bleichmittel, Salze, Säuren, Komplexbildner, Füllstoffe, Farb- und Duftstoffe, Abspülregulatoren und/oder weitere Komponenten. Bei der Herstellung werden die Inhaltsstoffe in der Regel gemischt, komprimiert und anschließend zu Strängen extrudiert. Die Stränge werden schließlich auf die gewünschte Länge geschnitten und gegebenenfalls in WC-Körbchen eingebracht.

Mit einem solchen WC-Block oder -Stick können mehrere Effekte erzielt werden. Die WC-Schüssel kann beispielsweise gereinigt und/oder desinfiziert werden. Weiterhin ist z.B. auch eine Hemmung unangenehmer Gerüche oder die Beduftung mit einem Parfum möglich. Die für diese verschiedenen Wirkungen benötigten Inhaltsstoffe sind jedoch nicht immer miteinander kompatibel. So können empfindliche Substanzen, wie Farbstoffe, beispielsweise von antimikrobiell wirksamen Bleichmitteln angegriffen werden; auch die Kompatibilität von Säuren oder Komplexbildnern, die zur Verhinderung von Kalk-, Rost- oder Urinsteinablagerungen eingesetzt werden, beispielsweise mit Parfüms ist häufig nicht gegeben. Solche WC-Sticks mit Mehrfachnutzen werden daher vorteilhafterweise als mehrphasige Sticks ausgestaltet. Die verschiedenen Phasen können dabei mit unterschiedlichen Farben ausgestattet sein, um so auch dem Verbraucher den Mehrfachnutzen zu signalisieren. Dabei können die verschiedenen Phasen entweder horizontal übereinander oder vertikal neben- bzw. hintereinander angeordnet sein.

Neben WC-Sticks, die in einem WC-Körbchen unter den Rand einer Toilette positioniert werden, sind seit geraumer Zeit selbsthaftende streifenförmige WC-Reinigerprodukte erhältlich, die vom Benutzer in die Toilettenschüssel geklebt werden, wo sie dann haften und vom Spülwasser abgespült werden. Diese Streifen werden bislang in nur einfachen Geometrien gefertigt. Üblicherweise weisen derartige Streifen eine rechteckige Grundform auf.

Es wäre daher wünschenswert, ästhetisch ansprechendere streifenförmige WC-Reinigerprodukte der eingangs geschilderten Art zur Verfügung zu haben.

### Aufgabe:

Aufgabe der vorliegenden Erfindung ist es daher, ein für einen Benutzer ästhetisch ansprechendes streifenförmiges WC-Reinigungsprodukt bereitzustellen. Eine weitere Aufgabe der Erfindung ist es, ein mehrphasiges, streifenförmiges WC-Reinigungsprodukt bereitzustellen, das bei der Applikation auf einer keramischen Oberfläche durch einen Benutzer nicht entlang der Phasengrenzen auseinander bricht. Ferner ist es eine Aufgabe der Erfindung, das streifenförmige WC-Reinigungsprodukt in einer Verpackung anzubieten, die eine einfache und sichere Applikation des WC-Reinigungsprodukts in einem Toilettenbecken erlaubt.

Diese Aufgabe wird durch ein streifenförmiges WC-Reinigungsprodukt mit den Merkmalen des Anspruchs 1 und durch ein Verfahren zur Herstellung eines streifenförmigen WC-Reinigungsprodukts mit den Merkmalen des Anspruchs 8-9 sowie einer Verpackung gemäß Anspruch 10 gelöst.

Das erfindungsgemäße streifenförmige WC-Reinigungsprodukt zur Applikation im Inneren eines Toilettenbeckens umfasst
- eine Breite (B), eine Höhe (H) und eine Stärke (S), wobei das Verhältnis zwischen Breite (B), Höhe (H) und Stärke (S) zwischen 1:1:0,01 und 1:0,1:0,2 liegt,
- eine erste extrudierte Phase und
- wenigstens eine zweite extrudierte Phase, wobei die erste Phase von wenigstens der zweiten Phase verschieden ist, wobei jedoch alle Phasen wenigstens einen Haftvermittler zumindest auf der auf das Toilettenbecken zu applizierenden Seite des WC-Reinigungsprodukts umfassen und
- die erste Phase und wenigstens die zweite Phase eine Kontaktfläche miteinander aufweisen wobei
- wenigstens die Kontur einer Kontaktfläche entlang der Mittelachse in Form einer sinusartigen Welle ausgebildet ist, die eine Amplitude von A_{1,O} aufweist, wobei das Verhältnis von Amplitude zur Breite (B) A_{1,O}:B zwischen 1:10 und 1:25 beträgt und die Periodenlänge der sinusartigen Welle 0,1-1 mal der Breite (B) des WC-Reinigerprodukts entspricht.

Es wurde überraschenderweise festgestellt, dass die sinusförmige Ausbildung der Kontaktfläche zwischen den Extrudatphasen gegenüber geradlinigen Kontaktflächen eine signifikant größere Stabilität der Phasengrenzen insbesondere beim Andrücken des streifenförmigen WC-Reinigungsprodukts auf eine Toilettenoberfläche durch einen Benutzer aufweist und so ein Auseinanderbrechen der Extrudatphasen vermieden wird. Die verbesserte Stabilität der Phasengrenzen zeigt sich des Weiteren auch beim Öffnen eines das WC-Reinigungsprodukt umschließenden Folienbeutels, worauf nachfolgend noch näher eingegangen wird.

In einer bevorzugten Ausgestaltung der Erfindung weisen die erste Phase und die wenigstens zweite Phase des streifenförmigen WC-Reinigungsprodukts die gleiche Breite auf.

Gemäß einer weiteren zu bevorzugenden Ausgestaltung des streifenförmigen WC-Reinigungsprodukts weisen die erste Phase und wenigstens die zweite Phase, bevorzugt alle Phasen, im Wesentlichen die gleiche Höhe (H₁,H₂,H₃) auf.

Unter streifenförmig wird im Sinne dieser Anmeldung ein WC-Reinigungsprodukt mit einem im Wesentlichen flachen Körper verstanden, dessen Flächenausmaße wesentlich größer sind als seine Stärke. Demgemäß weist das streifenförmige WC-Reinigungsprodukt insbesondere eine Breite (B), eine Höhe (H) und eine Stärke (S) auf, wobei das Verhältnis zwischen Breite (B), Höhe (H) und Stärke (S) zwischen 1:1:0,01 und 1:0,1:0,2 liegt.

Ganz besonders bevorzugt beträgt die Gesamthöhe des WC-Reinigungsprodukts zwischen 20-40 mm, bevorzugt zwischen 25-30mm, die Gesamtbreite des WC-Reinigungsprodukts liegt zwischen 50-75mm, bevorzugt zwischen 60-70mm und die Stärke des WC-Reinigungsprodukts beträgt zwischen 2-7 mm, bevorzugt zwischen 3-6 mm.

Des Weiteren ist es vorteilhaft, dass die erste Phase und wenigstens die zweite Phase, bevorzugt alle Phasen im Wesentlichen die gleiche Stärke (s) aufweisen.

In einer vorteilhaften Weiterentwicklung der Erfindung weisen die beiden das WC-Reinigungsprodukt begrenzenden Breitenseiten eine Kontur auf, die im Wesentlichen der Kontur der Kontaktfläche entspricht.

Die Dichte des WC-Reinigungsprodukts ist bevorzugt so eingestellt, dass sie zwischen 1-5 g/cm³, bevorzugt zwischen 1-3 g/cm³, insbesondere bevorzugt zwischen 1,1-1,5 g/cm³ beträgt. Die Dichte ist damit so eingestellt, dass das selbsthaftende, streifenförmige WC-Reinigungsprodukt für eine Applikation innerhalb eines Toilettenbeckens, insbesondere auf vertikalen oder zumindest geneigten Oberflächen innerhalb eines Toilettenbeckens, hinreichende Wirkstoffmengen zur Reinigung und Beduftung bereitstellen kann, jedoch gleichzeitig nicht zu schwer für eine lösbare, klebende Verbindung zwischen der Toilettenoberfläche und dem WC-Reinigungsprodukt wird.

### Haftvermittler

Alle Phasen des erfindungsgemäßen WC-Reinigungsprodukts umfassen wenigstens einen Haftvermittler. Der Haftvermittler erlaubt ein Anhaften des WC-Reinigungsprodukts auf einer keramischen Oberfläche, insbesondere innerhalb eines Toilettenbeckens.

Der Haftvermittler ist bevorzugt so ausgebildet, dass eine lösbare Klebverbindung zwischen der keramischen Oberfläche und dem WC-Reinigungsprodukt ausgebildet ist.

Es ist grundsätzlich möglich und auch bevorzugt, dass der Haftvermittler ein Bestandteil des extrudierten WC-Reinigungsprodukts ist, der Haftvermittler also der Rezeptur des WC-Reinigungsproduks vor der Extrusion beigefügt ist. Dies hat insbesondere den Vorteil, dass der Haftvermittler auch an den Phasengrenzen der extrudierten Phasen wirkt, so dass die Phasengrenzen weiter verstärkt werden können.

Somit ist es insbesondere zu bevorzugen, dass der Haftvermittler zwischen den Phasengrenzen und der auf das Toilettenbecken zu applizierenden Seite des WC-Reinigungsprodukts identisch ist.

Gemäß einer vorteilhaften Ausgestaltung der Erfindung enthält der Haftvermittler einen Ester der Polyisobutenbernsteinsäure.

Unter Polyisobutenbernsteinsäure versteht man oligomere oder polymere Makromoleküle mit einem Oligomerrest bzw. Polymerrest, der von Isobuten abgeleitet ist und der an einem seiner Termini einen oder zwei von Bernsteinsäure abgeleitete Reste, also Reste der Formel BS

-CH(COOH)CH₂COOH (BS)

und dementsprechend 2 oder 4 Carboxylgruppen aufweist, sowie Gemische davon.

Polyisobutenbernsteinsäuren können daher durch die folgende Formeln IIa und IIb beschrieben werden:

PIB-CH(COOH)CH₂COOH (IIa)

PIB'-[CH(COOH)CH₂COOH]₂ (IIb)

wobei PIB in Formel IIa für einen einwertigen, von Polyisobuten abgeleiteten Oligomerrest bzw. Polymerrest und PIB' in Formel IIb für einen zweiwertigen, von Polyisobuten abgeleiteten Oligomerrest bzw. Polymerrest stehen.

In den erfindungsgemäß verwendeten Estern der Polyisobutenbernsteinsäure liegt wenigstens eine der Carboxylgruppen in Form des Esters mit einem Poly-C₂-C₄-alkylenglykol oder einem Poly-C₂-C₄-alkylenglykolmono-C₁-C₂₂-alkylether vor.

Bevorzugte Ester der Polyisobutenbernsteinsäure sind solche, die in der Patentanrheldung WO 2012/095404 A1 beschrieben werden.

Das erfindungsgemäße WC-Reinigungsprodukt kann anstelle von oder zusätzlich zu diesem Polyisobutenbernsteinsäureester auch andere Haftvermittler enthalten. Hierbei handelt es sich üblicherweise um Verdickungsmittel, die das Anhaften des erfindungsgemäßen Mittels an der WC-Oberfläche ermöglichen und dem Mittel die gewünschte Konsistenz geben. Hierzu eignen sich alle üblicherweise in Wasch- und Reinigungsmitteln eingesetzten Viskositätsregulatoren, zu denen beispielsweise organische natürliche Verdickungsmittel (Agar-Agar, Carrageen, Tragant, Gummi arabicum, Alginate, Pektine, Polyosen, Guar-Mehl, Johannisbrotbaumkernmehl, Stärke, Dextrine, Gelatine, Casein), organische abgewandelte Naturstoffe (Carboxymethylcellulose und andere Celluloseether, Hydroxyethyl- und -propylcellulose und dergleichen, Kernmehlether), organische vollsynthetische Verdickungsmittel (Polyacryl- und Polymethacryl-Verbindungen, Vinylpolymere, Polycarbonsäuren, Polyether, Polyimine, Polyamide) und anorganische Verdickungsmittel (Polykieselsäuren, Schichtsilikate, Tonmineralien wie Montmorillonite, Zeolithe, Kieselsäuren) zählen. Neben üblichen Verdickern können zudem weitere üliche Inhaltsstoffe von Reinigungsmitteln als Haftvermittler fungieren, beispielsweise Tenside.

Bevorzugte Verdickungsmittel sind die Polysaccharide und Heteropolysaccharide, insbesondere die Polysaccharidgummen, beispielsweise Gummi arabicum, Agar, Alginate, Carrageene und ihre Salze, Guar, Guaran, Traganth, Gellan, Ramsan, Dextran oder Xanthan und ihre Derivate, z.B. propoxyliertes Guar, sowie ihre Mischungen. Andere Polysaccharidverdicker, wie Stärken oder Cellulosederivate, können alternativ, vorzugsweise aber zusätzlich zu einem Polysaccharidgummi eingesetzt werden, beispielsweise Stärken verschiedensten Ursprungs und Stärkederivate, z.B. Hydroxyethylstärke, Stärkephosphatester oder Stärkeacetate, oder Carboxymethylcellulose bzw. ihr Natriumsalz, Methyl-, Ethyl-, Hydroxyethyl-, Hydroxypropyl-, Hydroxypropyl-methyl- oder Hydroxyethylmethyl-cellulose oder Celluloseacetat.

Neben den genannten Verdickern können als Haftvermittler auch solche Stoffe eingesetzt werden, die üblicherweise als Haftklebstoffe eingesetzt werden. Hierzu zählen beispielsweise haftende Polymere. Es ist hierbei jedoch darauf zu achten, dass das WC-Reinigungsprodukt in der Weise formuliert werden muss, dass die Verbindung zwischen Reinigungsprodukt und WC-Schüssel nicht permanent, sondern reversibel erfolgt, die Adhäsionskräfte also nicht zu stark wirken, damit nach Ablauf der Gebrauchsdauer keine haftenden Rückstände verbleiben-

Der Haftvermittler ist vorzugsweise ein Bestandteil der zu extrudierenden Masse des WC-Reinigungsprodukts. Es ist jedoch auch möglich, dass der Haftvermittler dem extrudierten WC-Reinigungsprodukt nach der Extrusion zugefügt wird. Dies kann beispielsweise in Form eines einseitigen oder doppelseitigen Klebestreifens ("Teppichklebeband") oder auch in Form eines flächig oder punktuell aufgetragenen Klebstoffs geschehen. Insbesondere ist es auch denkbar, einen geeigneten Klebstoff auf eine Seite des streifenförmigen WC-Reinigungsprodukts aufzusprühen. Der Haftvermittler ist in diesen Fällen auf der Seite des WC-Reinigungsprodukts angeordnet, welcher auf die keramische Oberfläche appliziert wird.

Selbstverständlich ist es auch denkbar, dass als Haftvermittler sowohl ein Rezepturbestandteil des WC-Reinigungsprodukts und zusätzlich auch ein Klebestreifen oder aufgetragener Klebstoff verwendet wird.

### Tenside

Das erfindungsgemäße WC-Reinigungsprodukt enthält in einer zu bevorzugenden Ausführungsform mindestens ein Tensid. Dieses ist vorzugsweise ausgewählt aus der Gruppe umfassend anionische Tenside, nichtionische Tenside, amphotere Tenside und kationische Tenside sowie Gemische derselben. In einer bevorzugten Ausführungsform handelt es sich dabei um mindestens ein nichtionisches Tensid.

### Nichtionische Tenside

Nichtionische Tenside im Rahmen der Erfindung können Alkoxylate sein wie Polyglycolether, Fettalkoholpolyglycolether, Alkylphenolpolyglycolether, endgruppenverschlossene Polyglycolether, Mischether und Hydroxymischether und Fettsäurepolyglycolester. Ebenfalls verwendbar sind Ethylenoxid/Propylenoxid-Blockpolymere, Fettsäurealkanolamide und Fettsäurepolyglycolether. Eine weitere wichtige Klasse nichtionischer Tenside, die erfindungsgemäß verwendet werden kann, sind die Polyol-Tenside und hier besonders die Glykotenside, wie Alkylpolyglykoside und Fettsäureglucamide. Besonders bevorzugt sind die Alkylpolyglykoside, insbesondere die Alkylpolyglucoside, wobei besonders bevorzugt der Alkohol ein langkettiger Fettalkohol oder ein Gemisch langkettiger Fettalkohole mit verzweigten oder unverzweigten C₈- bis C₁₈-Alkylketten ist und der Oligomerisierungsgrad (DP) der Zucker zwischen 1 und 10, vorzugsweise 1 bis 6, insbesondere 1,1 bis 3, äußerst bevorzugt 1,1 bis 1,7, beträgt, beispielsweise C₈₋₁₀-Alkyl-1.5-glucosid (DP von 1,5). Daneben sind auch die Fettalkoholalkoxylate (Fettalkoholpolyglycolether) bevorzugt, insbesondere mit Ethylenoxid (EO) und/oder Propylenoxid (PO) alkoxylierte, unverzweigte oder verzweigte, gesättigte oder ungesättigte C₈₋₂₂-Alkohole mit einem Alkoxylierungsgrad bis zu 30, vorzugsweise ethoxylierte C₁₂₋₂₂-Fettalkohole mit einem Ethoxylierungsgrad von weniger als 30, bevorzugt 12 bis 28, insbesondere 20 bis 28, besonders bevorzugt 25, beispielsweise C₁₆₋₁₈-Fettalkoholethoxylate mit 25 EO.

Das erfindungsgemäße Produkt kann bevorzugt weiterhin mindestens ein Aniontensid enthalten. Bevorzugte anionische Tenside sind hierbei Fettalkoholsulfate, Fettalkoholethersulfate, Dialkylethersulfate, Monoglyceridsulfate Alkylbenzolsulfonate, Olefinsulfonate, Alkansulfonate, Ethersulfonate, n-Alkylethersulfonate, Estersulfonate und Ligninsulfonate. Ebenfalls im Rahmen der vorliegenden Erfindung verwendbar sind Fettsäurecyanamide, Sulfosuccinate (Sulfobernsteinsäureester), insbesondere Sulfobernsteinsäuremono- und -di-C₈-C₁₈-Alkylester, Sulfosuccinamate, Sulfosuccinamide, Fettsäureisethionate, Acylaminoalkansulfonate (Fettsäuretauride), Fettsäuresarcosinate, Ethercarbonsäuren und Alkyl(ether)phosphate sowie α-Sulfofettsäuresalze, Acylglutamate, Monoglyceriddisulfate und Alkylether des Glycerindisulfats.

Bevorzugt im Rahmen der vorliegenden Erfindung sind die Fettalkoholsulfate und/oder Fettalkoholethersulfate, insbesondere die Fettalkoholsulfate. Fettalkoholsulfate sind Produkte von Sulfatierreaktionen an entsprechenden Alkoholen, während Fettalkoholethersulfate Produkte von Sulfatierreaktionen an alkoxylierten Alkoholen sind. Dabei versteht der Fachmann allgemein unter alkoxylierten Alkoholen die Reaktionsprodukte von Alkylenoxid, bevorzugt Ethylenoxid, mit Alkoholen, im Sinne der vorliegenden Erfindung bevorzugt mit längerkettigen Alkoholen. In der Regel entsteht aus n Molen Ethylenoxid und einem Mol Alkohol, abhängig von den Reaktionsbedingungen, ein komplexes Gemisch von Additionsprodukten unterschiedlicher Ethoxylierungsgrade. Eine weitere Ausführungsform der Alkoxylierung besteht im Einsatz von Gemischen der Alkylenoxide, bevorzugt des Gemisches von Ethylenoxid und Propylenoxid. Bevorzugte Fettalkoholethersulfate sind die Sulfate niederethoxylierter Fettalkohole mit 1 bis 4 Ethylenoxideinheiten (EO), insbesondere 1 bis 2 EO, beispielsweise 1,3 EO. Bei den Alkylbenzolsulfonaten sind insbesondere solche mit etwa 12 C-Atomen im Alkylteil bevorzugt, etwa lineares Natrium-C10-13-Alkylbenzolsulfonat. Bevorzugte Olefinsulfonate weisen eine Kohlenstoffkettenlänge von 14 bis 16 auf.

Die anionischen Tenside werden vorzugsweise als Natriumsalze eingesetzt, können aber auch als andere Alkali- oder Erdalkalimetallsalze, beispielsweise Magnesiumsalze, sowie in Form von Ammonium- oder Mono-, Di-, Tri- bzw. Tetraalkylammoniumsalzen enthalten sein, im Falle der Sulfonate auch in Form ihrer korrespondierenden Säure, z.B. Dodecylbenzolsulfonsäure.

Neben den bisher genannten Tensidtypen kann das erfindungsgemäße Mittel weiterhin auch Kationtenside und/oder amphotere Tenside enthalten.

Geeignete Amphotenside sind beispielsweise Betaine der Formel (Rⁱⁱⁱ)(R^{iv})(R^{v})N⁺CH₂COO⁻, in der Rⁱⁱⁱ einen gegebenenfalls durch Heteroatome oder Heteroatomgruppen unterbrochenen Alkylrest mit 8 bis 25, vorzugsweise 10 bis 21 Kohlenstoffatomen und R^{iv} sowie R^{v} gleichartige oder verschiedene Alkylreste mit 1 bis 3 Kohlenstoffatomen bedeuten, insbesondere C₁₀-C₁₈-Alkyl-dimethylcarboxymethylbetain und C₁₁-C₁₇-Alkylamidopropyl-dimethylcarboxymethylbetain.

Geeignete Kationtenside sind u.a. die quartären Ammoniumverbindungen der Formel (R^{vi})(R^{vii})(R^{viii})(R^{ix})N⁺ X⁻, in der R^{vi} bis R^{ix} für vier gleich- oder verschiedenartige, insbesondere zwei lang- und zwei kurzkettige, Alkylreste und X⁻ für ein Anion, insbesondere ein Halogenidion, stehen, beispielsweise Didecyl-dimethyl-ammoniumchlorid, Alkyl-benzyldidecyl-ammoniumchlorid und deren Mischungen.

### Parfüm

Das erfindungsgemäße WC-Reinigungsprodukt enthält einen oder mehrere Duftstoffe, vorzugsweise in einer Menge von 0,01 bis 10 Gew.-%, insbesondere 0,05 bis 8 Gew.-%, besonders bevorzugt 0,1 bis 5 Gew.-%. Als eine Parfümkomponente kann dabei d-Limonen enthalten sein. In einer besonders bevorzugten Ausführungsform enthält der erfindungsgemäße WC-Reinigungsblock dabei ein Parfüm aus ätherischen Ölen (auch als essentielle Öle bezeichnet). Als solche sind beispielsweise Pine-, Citrus-, Jasmin-, Patchouly-, Rosen- oder Ylang-Ylang-Öl im Sinne dieser Erfindung einsetzbar. Ebenfalls geeignet sind Muskateller-Salbeiöl, Kamillenöl, Lavendelöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl. Weitere üblicherweise in Wasch-und Reinigungsmitteln eingesetzte Riechstoffe sind gleichfalls zum Einsatz im erfindungsgemäßen WC-Reinigungsprodukt geeignet, etwa weitere ätherische Öle, Ester, Alkohole, Aldehyde, oder Terpene.

### Weitere Inhaltsstoffe

Neben den bisher genannten Komponenten kann das erfindungsgemäße WC-Reinigungsprodukt weitere, üblicherweise in WC-Reinigungsprodukten eingesetzte Inhaltsstoffe enthalten, vorzugsweise ausgewählt aus der Gruppe umfassend Säuren, Basen, Salze, Verdickungsmittel, antimikrobielle Wirkstoffe, Konservierungsstoffe, Komplexbildner, Bitterstoffe, Polymere, Farbstoffe, Duftstoffe, Parfümbooster, Füllstoffe, Builder, Bleichmittel, Korrosionsinhibitoren, Abspülregulatoren, Enzyme, Mikroorganismen, Wirkstoffe zur Biofilmentfernung, Wirkstoffe zur Inhibierung der Kalkablagerung, Wirkstoffe zur Verminderung der Schmutzhaftung, Wirkstoffe zur Verbesserung der Verarbeitbarkeit sowie Gemische derselben. Insgesamt sollten nicht mehr als 60 Gew.-% weitere Inhaltsstoffe enthalten sein, vorzugsweise 0,01 bis 60 Gew.-%, insbesondere 0,2 bis 15 Gew.-%.

### Säuren

Erfindungsgemäße WC-Reinigungsprodukte können zur Verstärkung der Reinigungsleistung gegenüber Kalk und Urinstein eine oder mehrere Säuren und/oder deren Salze enthalten. Bevorzugt werden die Säuren aus nachwachsenden Rohstoffen hergestellt. Als Säuren eignen sich daher insbesondere organische Säuren wie Ameisensäure, Essigsäure, Citronensäure, Glycolsäure, Milchsäure, Bernsteinsäure, Adipinsäure, Äpfelsäure, Weinsäure und Gluconsäure sowie Gemische derselben. Daneben können aber auch die anorganischen Säuren Salzsäure, Schwefelsäure, Phosphorsäure und Salpetersäure oder auch Amidosulfonsäure bzw. deren Mischungen eingesetzt werden. Besonders bevorzugt sind die Säuren und/oder ihre Salze ausgewählt aus der Gruppe umfassend Citronensäure, Milchsäure, Ameisensäure, ihre Salze sowie Gemische derselben. Sie werden vorzugsweise in Mengen von 0,01 bis 10 Gew.-% eingesetzt, besonders bevorzugt 0,2 bis 5 Gew.-%.

Daneben enthält das erfindungsgemäße WC-Reinigungsprodukt in einer bevorzugten Ausführungsform anorganische Salze, vorzugsweise Alkali- oder Erdalkalimetallsalze, insbesondere Carbonate, Sulfate, Halogenide oder Phosphate sowie Gemische derselben. Besonders bevorzugt werden Natriumsulfat und/oder Natriumcarbonat eingesetzt. Natriumsulfat kann dabei in einer Menge von bis zu 60 Gew.-% enthalten sein, vorzugsweise 0,01 bis 60 Gew.-%, besonders bevorzugt 20 bis 60 Gew.-%, insbesondere 35 bis 55 Gew.-%. Natriumcarbonat und weitere Salze können in einer Menge von bis zu 30 Gew.-%, vorzugsweise bis zu 10 Gew.-%, besonders bevorzugt bis zu 5 Gew.-% enthalten sein.

### Basen

In erfindungsgemäßen WC-Reinigungsprodukten können weiterhin Alkalien enthalten sein. Als Basen werden in erfindungsgemäßen Mitteln vorzugsweise solche aus der Gruppe der Alkali- und Erdalkalimetallhydroxide und -carbonate, insbesondere Natriumcarbonat oder Natriumhydroxid, eingesetzt. Daneben können aber auch Ammoniak und/oder Alkanolamine mit bis zu 9 C-Atomen im Molekül verwendet werden, vorzugsweise die Ethanolamine, insbesondere Monoethanolamin.

### Antimikrobielle Wirkstoffe

Eine besondere Form der Reinigung stellen die Desinfektion und die Sanitation dar. In einer entsprechenden besonderen Ausführungsform der Erfindung enthält das WC-Reinigungsprodukt daher einen oder mehrere antimikrobielle Wirkstoffe, vorzugsweise in einer Menge von 0,01 bis 1 Gew.-%, vorzugsweise 0,02 bis 0,8 Gew.-%, insbesondere 0,05 bis 0,5 Gew.-%, besonders bevorzugt 0,1 bis 0,3 Gew.-%, äußerst bevorzugt 0,2 Gew.-%. Die Begriffe Desinfektion, Sanitation, antimikrobielle Wirkung und antimikrobieller Wirkstoff haben im Rahmen der erfindungsgemäßen Lehre die fachübliche Bedeutung. Während Desinfektion im engeren Sinne der medizinischen Praxis die Abtötung von - theoretisch allen - Infektionskeimen bedeutet, ist unter Sanitation die möglichst weitgehende Eliminierung aller-auch der für den Menschen normalerweise unschädlichen saprophytischen - Keime zu verstehen. Hierbei ist das Ausmaß der Desinfektion bzw. Sanitation von der antimikrobiellen Wirkung des angewendeten Mittels abhängig, die mit abnehmendem Gehalt an antimikrobiellem Wirkstoff bzw. zunehmender Verdünnung des Mittels zur Anwendung abnimmt.

Erfindungsgemäß geeignet sind beispielsweise antimikrobielle Wirkstoffe aus den Gruppen der Alkohole, Aldehyde, antimikrobiellen Säuren bzw. deren Salze, Carbonsäureester, Säureamide, Phenole, Phenolderivate, Diphenyle, Diphenylalkane, Harnstoffderivate, Sauerstoff-, Stickstoff-Acetale sowie -Formale, Benzamidine, Isothiazole und deren Derivate wie Isothiazoline und Isothiazolinone, Phthalimidderivate, Pyridinderivate, antimikrobiellen oberflächenaktiven Verbindungen, Guanidine, antimikrobiellen amphoteren Verbindungen, Chinoline, 1,2-Dibrom-2,4-dicyanobutan, lodo-2-propynyl-butyl-carbamat, Iod, lodophore, Aktivchlor abspaltenden Verbindungen und Peroxide. Bevorzugte antimikrobielle Wirkstoffe werden vorzugsweise ausgewählt aus der Gruppe umfassend Ethanol, n-Propanol, i-Propanol, 1,3-Butandiol, Phenoxyethanol, 1,2-Propylenglykol, Glycerin, Undecylensäure, Citronensäure, Milchsäure, Benzoesäure, Salicylsäure, Thymol, 2-Benzyl-4-chlorphenol, 2,2'-Methylen-bis-(6-brom-4-chlorphenol), 2,4,4'-Trichlor-2'-hydroxydiphenylether, N-(4-Chlorphenyl)-N-(3,4-dichlorphenyl)-harnstoff, N,N'-(1,10-decandiyldi-1-pyridinyl-4-yliden)-bis-(1-octanamin)-dihydrochlorid, N,N'-Bis-(4-Chlorphenyl)-3,12-diimino-2,4,11,13-tetraazatetradecandiimidamid, antimikrobielle quaternäre oberflächenaktive Verbindungen, Guanidine und Natrium-Dichlorisocyanurat (DCI, 1,3-Dichlor-5H-1,3,5-triazin-2,4,6-trion Natriumsalz). Bevorzugte antimikrobiell wirkende oberflächenaktive quaternäre Verbindungen enthalten eine Ammonium-, Sulfonium-, Phosphonium-, Jodonium- oder Arsoniumgruppe. Weiterhin können auch antimikrobiell wirksame ätherische Öle eingesetzt werden, die gleichzeitig für eine Beduftung des Reinigungsprodukts sorgen. Besonders bevorzugte antimikrobielle Wirkstoffe sind jedoch ausgewählt aus der Gruppe umfassend Salicylsäure, quaternäre Tenside, insbesondere Benzalkoniumchlorid, Peroxo-Verbindungen, insbesondere Wasserstoffperoxid, Alkalimetallhypochlorit, Natriumdichlorisocyanurat sowie Gemische derselben.

### Konservierungsstoffe

Konservierungsstoffe können gleichfalls in erfindungsgemäßen WC-Reinigungsprodukten enthalten sein. Als solche können im Wesentlichen die bei den antimikrobiellen Wirkstoffen genannten Stoffe eingesetzt werden.

### Komplexbildner

Komplexbildner *(INCI* Chelating Agents), auch Sequestriermittel genannt, sind Inhaltsstoffe, die Metallionen zu komplexieren und inaktivieren vermögen, um ihre nachteiligen Wirkungen auf die Stabilität oder das Aussehen der erfindungsgemäßen WC-Reinigungsprodukten, beispielsweise Trübungen, zu verhindern. Einerseits ist es dabei wichtig, die mit zahlreichen Inhaltsstoffen inkompatiblen Calcium- und Magnesiumionen der Wasserhärte zu komplexieren. Die Komplexierung der Ionen von Schwermetallen wie Eisen oder Kupfer verzögert andererseits die oxidative Zersetzung der fertigen Mittel. Zudem unterstützen die Komplexbildner die Reinigungswirkung.

Geeignet sind beispielsweise die folgenden gemäß *INCI* bezeichneten Komplexbildner: Aminotrimethylene Phosphonic Acid, Beta-Alanine Diacetic Acid, Calcium Disodium EDTA, Citric Acid, Cyclodextrin, Cyclohexanediamine Tetraacetic Acid, Diammonium Citrate, Diammonium EDTA, Diethylenetriamine Pentamethylene Phosphonic Acid, Dipotassium EDTA, Disodium Azacycloheptane Diphosphonate, Disodium EDTA, Disodium Pyrophosphate, EDTA, Etidronic Acid, Galactaric Acid, Gluconic Acid, Glucuronic Acid, HEDTA, Hydroxypropyl Cyclodextrin, Methyl Cyclodextrin, Pentapotassium Triphosphate, Pentasodium Aminotrimethylene Phosphonate, Pentasodium Ethylenediamine Tetramethylene Phosphonate, Pentasodium Pentetate, Pentasodium Triphosphate, Pentetic Acid, Phytic Acid, Potassium Citrate, Potassium EDTMP, Potassium Gluconate, Potassium Polyphosphate, Potassium Trisphosphonomethylamine Oxide, Ribonic Acid, Sodium Chitosan Methylene Phosphonate, Sodium Citrate, Sodium Diethylenetriamine Pentamethylene Phosphonate, Sodium Dihydroxyethylglycinate, Sodium EDTMP, Sodium Gluceptate, Sodium Gluconate, Sodium Glycereth-1 Polyphosphate, Sodium Hexametaphosphate, Sodium Metaphosphate, Sodium Metasilicate, Sodium Phytate, Sodium Polydimethylglycinophenolsulfonate, Sodium Trimetaphosphate, TEA-EDTA, TEA-Polyphosphate, Tetrahydroxyethyl Ethylenediamine, Tetrahydroxypropyl Ethylenediamine, Tetrapotassium Etidronate, Tetrapotassium Pyrophosphate, Tetrasodium EDTA, Tetrasodium Etidronate, Tetrasodium Pyrophosphate, Tripotassium EDTA, Trisodium Dicarboxymethyl Alaninate, Trisodium EDTA, Trisodium HEDTA, Trisodium NTA und Trisodium Phosphate.

### Polymere

Das erfindungsgemäße WC-Reinigungsprodukt kann weiterhin Polymere enthalten. Diese können beispielsweise zur Verringerung der Kalkbildung sowie der Wiederanschmutzungsneigung dienen.

Bevorzugte Polymere sind dabei Acrylpolymere, wie sie etwa von der Firma Rhodia unter dem Handelsnamen Mirapol kommerziell erhältlich sind.

### Farbstoffe

Als weitere Inhaltsstoffe kann das erfindungsgemäße WC-Reinigungsprodukt ein oder mehrere Farbstoffe (*INCI* Colorants) enthalten. Als Farbstoffe können dabei sowohl wasserlösliche als auch öllösliche Farbstoffe verwendet werden, wobei einerseits die Kompatibilität mit weiteren Inhaltsstoffen, beispielsweise Bleichmitteln, zu beachten ist und andererseits der eingesetzte Farbstoff gegenüber der WC-Keramik auch bei längerem Einwirken nicht substantiv wirken sollte. Die Farbstoffe sind vorzugsweise in einer Menge von 0,0001 bis 0,1 Gew.-%, insbesondere 0,0005 bis 0,05 Gew.-%, besonders bevorzugt 0,001 bis 0,01 Gew.-%, enthalten.

### Builder

In den erfindungsgemäßen WC-Reinigungsprodukten können ggf. wasserlösliche und/oder wasserunlösliche Builder eingesetzt werden. Dabei sind wasserlösliche Builder bevorzugt, da sie in der Regel weniger dazu tendieren, auf harten Oberflächen unlösliche Rückstände zu hinterlassen. Übliche Builder, die im Rahmen der Erfindung zugegen sein können, sind die niedermolekularen Polycarbonsäuren und ihre Salze, die homopolymeren und copolymeren Polycarbonsäuren und ihre Salze, die Citronensäure und ihre Salze, die Carbonate, Phosphate und Silikate. Zu wasserunlöslichen Buildern zählen die Zeolithe, die ebenfalls verwendet werden können, ebenso wie Mischungen der vorgenannten Buildersubstanzen.

### Bleichmittel

Erfindungsgemäß können Bleichmittel dem Reinigungsprodukt zugesetzt werden. Geeignete Bleichmittel umfassen Peroxide, Persäuren und/oder Perborate, besonders bevorzugt ist Natriumpercarbonat oder Phthalimidoperoxyhexanoic acid. Chlorhaltige Bleichmittel wie Trichlorisocyanursäure oder Natriumdichlorisocyanurat sind dagegen bei sauer formulierten Reinigungsmitteln aufgrund der Freisetzung giftiger Chlorgas-Dämpfe weniger geeignet, können jedoch in alkalisch eingestellten Reinigungsmitteln eingesetzt werden. Unter Umständen kann neben dem Bleichmittel auch ein Bleichaktivator vonnöten sein.

### Korrosionsinhibitoren

Geeignete Korrosionsinhibitoren (*INCI* Corrosion Inhibitors) sind beispielsweise folgende gemäß *INCI* benannte Substanzen: Cyclohexylamine, Diammonium Phosphate, Dilithium Oxalate, Dimethylamino Methylpropanol, Dipotassium Oxalate, Dipotassium Phosphate, Disodium Phosphate, Disodium Pyrophosphate, Disodium Tetrapropenyl Succinate, Hexoxyethyl Diethylammonium, Phosphate, Nitromethane, Potassium Silicate, Sodium Aluminate, Sodium Hexametaphosphate, Sodium Metasilicate, Sodium Molybdate, Sodium Nitrite, Sodium Oxalate, Sodium Silicate, Stearamidopropyl Dimethicone, Tetrapotassium Pyrophosphate, Tetrasodium Pyrophosphate, Triisopropanolamine.

### Abspülregulatoren

Die als Abspülregulatoren bezeichneten Substanzen dienen in erster Linie dazu, den Verbrauch der Mittel während des Einsatzes so zu steuern, dass die vorgesehene Standzeit eingehalten wird. Als Regulatoren eignen sich vorzugsweise feste langkettige Fettsäuren, wie Stearinsäure, aber auch Salze solcher Fettsäuren, Fettsäureethanolamide, wie Kokosfettsäuremonoethanolamid, oder feste Polyethylenglykole, wie solche mit Molekulargewichten zwischen 10000 und 50000.

### Enzyme

Das WC-Reinigungsprodukt kann auch Enzyme enthalten, vorzugsweise Proteasen, Lipasen, Amylasen, Hydrolasen und/oder Cellulasen. Sie können dem erfindungsgemäßen Mittel in jeder nach dem Stand der Technik etablierten Form zugesetzt werden. Hierzu gehören Lösungen der Enzyme, vorteilhafterweise möglichst konzentriert, wasserarm und/oder mit Stabilisatoren versetzt. Alternativ können die Enzyme verkapselt werden, beispielsweise durch Sprühtrocknung oder Extrusion der Enzymlösung zusammen mit einem, vorzugsweise natürlichen, Polymer oder in Form von Kapseln, beispielsweise solchen, bei denen die Enzyme wie in einem erstarrten Gel eingeschlossen sind oder in solchen vom Kern-Schale-Typ, bei dem ein enzymhaltiger Kern mit einer Wasser-, Luft- und/oder Chemikalienundurchlässigen Schutzschicht überzogen ist. In aufgelagerten Schichten können zusätzlich weitere Wirkstoffe, beispielsweise Stabilisatoren, Emulgatoren, Pigmente, Bleich-oder Farbstoffe aufgebracht werden. Derartige Kapseln werden nach an sich bekannten Methoden, beispielsweise durch Schüttel- oder Rollgranulation oder in Fluid-bed-Prozessen aufgebracht. Vorteilhafterweise sind derartige Granulate, beispielsweise durch Aufbringen polymerer Filmbildner, staubarm und aufgrund der Beschichtung lagerstabil.

Weiterhin können in enzymhaltigen WC-Reinigungsprodukten Enzymstabilisatoren vorhanden sein, um ein in einem erfindungsgemäßen WC-Reinigungsprodukt enthaltenes Enzym vor Schädigungen wie beispielsweise Inaktivierung, Denaturierung oder Zerfall etwa durch physikalische Einflüsse, Oxidation oder proteolytische Spaltung zu schützen. Als Enzymstabilisatoren sind, jeweils in Abhängigkeit vom verwendeten Enzym, insbesondere geeignet: Benzamidin-Hydrochlorid, Borax, Borsäuren, Boronsäuren oder deren Salze oder Ester, vor allem Derivate mit aromatischen Gruppen, etwa substituierte Phenylboronsäuren beziehungsweise deren Salze oder Ester; Peptidaldehyde (Oligopeptide mit reduziertem C-Terminus), Aminoalkohole wie Mono-, Di-, Triethanol- und -Propanolamin und deren Mischungen, aliphatische Carbonsäuren bis zu C₁₂, wie Bernsteinsäure, andere Dicarbonsäuren oder Salze der genannten Säuren; endgruppenverschlossene Fettsäureamidalkoxylate; niedere aliphatische Alkohole und vor allem Polyole, beispielsweise Glycerin, Ethylenglykol, Propylenglykol oder Sorbit; sowie Reduktionsmittel und Antioxidantien wie Natrium-Sulfit und reduzierende Zucker. Weitere geeignete Stabilisatoren sind aus dem Stand der Technik bekannt. Bevorzugt werden Kombinationen von Stabilisatoren verwendet, beispielsweise die Kombination aus Polyolen, Borsäure und/oder Borax, die Kombination von Borsäure oder Borat, reduzierenden Salzen und Bernsteinsäure oder anderen Dicarbonsäuren oder die Kombination von Borsäure oder Borat mit Polyolen oder Polyaminoverbindungen und mit reduzierenden Salzen.

### Ausführungsbeispiele

Es wurden erfindungsgemäße WC-Reinigungsprodukte E1 bis E3 hergestellt. Mit diesen Zusammensetzungen wurden Versuche unternommen, die Gemische zu extrudieren, zu einem streifenförmigen, zweiphasigen WC-Reinigungsprodukt mit einer sinusartigen Wellenform zu formen und aus dem Extrusionsstrang Stücke einer definierten Masse zu schneiden. Die erfindungsgemäßen Reinigungsprodukte konnten bei maximal 30°C extrudiert und geformt werden und zeigten darüber hinaus keinerlei Aufquellen beim Abspülen.

Die Zusammensetzungen E1 bis E3 sind der nachfolgenden Tabelle zu entnehmen. Alle Mengenangaben sind dabei in Gew.-% Aktivsubstanz.

| | E1 | E2 | E3 |
|---|---|---|---|
| Alkylpolyglykosid | 16,45 | -- | -- |
| Fettalkoholethersulfat | -- | 7 | 8,4 |
| Sekundäres Alkansulfonat | -- | 19 | 19 |
| Fettalkoholsulfat | -- | 18 | 18 |
| PIB-Ester | 3,5 | 5 | -- |
| 2-Tetradecyloctadecansäure | 7 | -- | -- |
| Silicat | 4 | -- | -- |
| Kieselsäure | 4 | -- | -- |
| Saponin | 3 | -- | -- |
| Titandioxid | 0,2 | -- | -- |
| Farbstoff | + | + | + |
| Parfümöl | 3 | 3,5 | 3,5 |
| Bitrex | + | + | + |
| Natriumsulfat | Ad 100% | Ad 100% | Ad 100% |

Als Silicate werden dabei Laponite-Typen eingesetzt, vorzugsweise Laponite RD oder Laponite TM. Bei der Kieselsäure handelt es sich um die unter dem Namen Aerosil 200 kommerziell erhältliche pyrogene Kieselsäure. Bitrex ist Denatoniumbenzoat (Benzyldiethyl-[(2, 6-xylylcarbamoyl)methyl]ammoniumbenzoat)

Ein weiteres erfindungsgemäßes WC-Reinigungsprodukt E4 wurde entsprechend der nachfolgenden Tabelle formuliert. Wiederum sind alle Mengenangaben in Gew.-% Aktivsubstanz.

| | E4 | |
|---|---|---|
| | Phase 1 | Phase 2 |
| Alkylbenzolsulfonat | 22,10 | 22,10 |
| Alpha-Olefinsulfonat | 19,00 | 19,00 |
| Fettalkoholethoxylat | 10,00 | 10,00 |
| Fettsäuremonoethanolamid | 4,00 | 4,00 |
| Alkylpolyglykosid | 2,50 | 2,50 |
| Paraffinöl | 2,00 | 2,00 |
| Bitterstoff | 0,0010 | 0,0010 |
| Trinatriumcitrat-Hydrat | - | 1,00 |
| Parfümöl | 4,00 | 4,00 |
| Farbstoff 1 | + | - |
| Farbstoff 2 | -- | + |
| Natriumsulfat | Ad 100 | Ad 100 |

Die Erfindung wird anhand der nachfolgenden Ausführungsbeispiele näher erläutert. Es zeigen:
- Fig. 1: Zweiphasiges, streifenförmiges WC-Reinigerprodukt mit sinusförmiger Kontaktfläche
- Fig. 2: Zweiphasiges, streifenförmiges WC-Reinigerprodukt mit sinusförmiger Kontaktfläche und gradlinigen Breitenseiten
- Fig. 3: Zweiphasiges, streifenförmiges WC-Reinigerprodukt mit doppelperiodigsinusförmiger Kontaktfläche
- Fig. 4: Dreiphasiges, streifenförmiges WC-Reinigerprodukt mit sinusförmigen Kontaktflächen
- Fig. 5: Extruderanordnung mit einer beweglichen Düse
- Fig. 6: Extruderanorndung mit zwei beweglichen Düsen
- Fig. 7: Bewegliche Extruderanorndung mit einer Düse
- Fig. 8: Bewegliche Extruderanordnung mit zwei Düsen
- Fig. 9: Streifenförmiges Reinigungsprodukt auf einer Verpackungsfolie

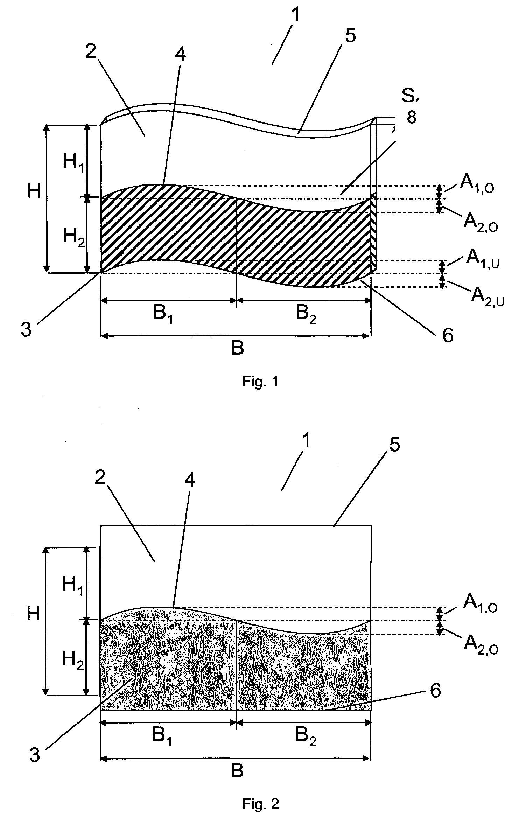

Fig. 1 zeigt eine erste Ausführungsform des erfindungsgemäßen WC-Reinigungsprodukts 1. Das streifenförmige WC-Reinigungsprodukt 1 besteht aus zwei Phasen, einer ersten oberen Phase 2. und einer zweiten unteren Phase 3, welche in der Fig. 1 schraffiert dargestellt ist.

Das WC-Reinigungsprodukt 1 weist eine Gesamthöhe H auf, wobei die einzelnen Phasen 2,3 jeweils eine Höhe H1 und H2 besitzen. Im gezeigten Beispiel haben die beiden Phasen 2,3 die gleiche Höhe H1=H2. Die Höhe des gezeigten Beispiels beträgt zwischen 25-30 mm. Die Gesamtbreite B des gezeigten WC-Reinigungsprodukts liegt zwischen 60-65 mm, wobei die Stärke S des WC-Reinigungsprodukts bei 4-5 mm liegt.

Man erkennt anhand der Fig.1, dass das WC-Reinigungsprodukt 1 entlang der Mittelachse 8 eine Kontaktfläche 4 zwischen der oberen Phase 2 und der unteren Phase 3 aufweist. Die Kontaktfläche 4 weist einen Verlauf um die Mittelachse 8 in Form einer sinusartigen Welle auf. Die Amplitude der sinusartigen Welle um die Mittelachse 8 beträgt A_{1,O}, wobei im gezeigten Beispiel die Amplitude A_{1,O}= A_{2,O} beträgt. Die Wellenlänge der sinusartigen Welle ist im gezeigten Beispiel gleich der Gesamtbreite B des WC-Reinigungsprodukts.

Wie ebenfalls gut aus Fig. 1 ersichtlich, weisen die das WC-Reinigungsprodukt 1 begrenzenden Breitenseiten 5,6 die gleiche Kontur auf wie die Kontur der Kontaktfläche 4, nämlich in Form einer sinusartigen Welle, wobei die sinusartige Welle der Breitenseiten 5,6 und der Kontaktfläche 4 parallel verlaufen. Im gezeigten Beispiel weisen in form einer Sinuswelle ausgebildeten Breitenseiten 5,6 eine Amplitude von A_{1,U} auf, wobei A_{1,U} = A_{2,U} = A_{1,O}= A_{2,O} ist.

Im gezeigten Beispiel beträgt die Amplitude A_{1,U} = A_{2,U} = A_{1,O}= A_{2,O} = 2,5mm

Fig. 2 zeigt eine Abwandlung des aus Fig. 1 bekannten streifenförmigen WC-Reinigungsproduktes 1. Das in Fig. 2 gezeigte WC-Reinigungsprodukt 1 weist ebenfalls eine erste obere Phase 2 und eine zweite untere Phase 3 auf, wobei die Kontaktfläche zwischen den beiden Phasen 2,3 sinusförmig ausgebildet ist. Die obere Breitenseite 5 und die untere Breitenseite 6 sind in dem gezeigten Ausführungsbeispiel gradlinig ausgebildet, so dass das WC-Reinigungsprodukt eine rechteckige Grundform aufweist.

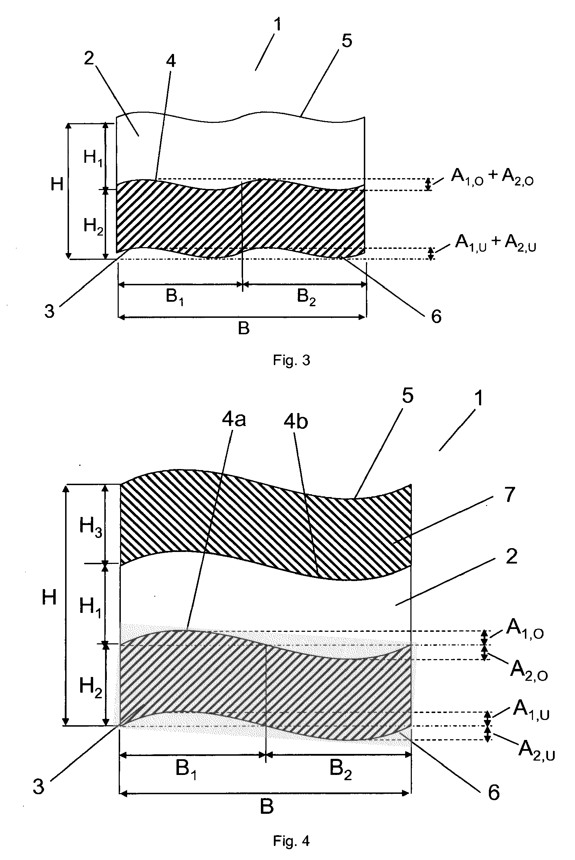

Eine weitere Abwandlung des aus Fig. 1 bekannten streifenförmigen WC-Reinigungsprodukts 1 ist in Fig. 3 dargestellt. Man erkennt, dass die Periodenlänge der sinusförmig ausgebildeten Kontaktfläche zwischen der ersten oberen Phase 2 und der zweiten unteren Phase 3 etwa 0,5 mal der Breite B des WC-Reinigungsprodukts 1 entspricht. Eine Periodenlänge der sinusförmigen Kontaktfläche 4 entspricht also der B₁=B₂, wobei gilt B₁=B₂=B/2.

Erneut ausgehend von dem aus Fig. 1 bekannten streifenförmigen WC-Reinigungsprodukt 1, zeigt Fig. 4 eine mögliche dreiphasige Ausgestaltung des WC-Reinigungsprodukts 1.

Das dreiphasige WC-Reinigungsprodukt 1 weist zwei Kontaktflächen 4a, 4b auf, wobei die erste obere Kontaktfläche 4a zwischen der obersten Phase 7 und der mittleren Phase 2 und die zweite untere Kontaktfläche zwischen der mittleren Phase 2 und der unteren Phase 3 liegt. Beide Phasen sind sinusförmig ausgebildet und verlaufen parallel zueinander.

### Herstellverfahren

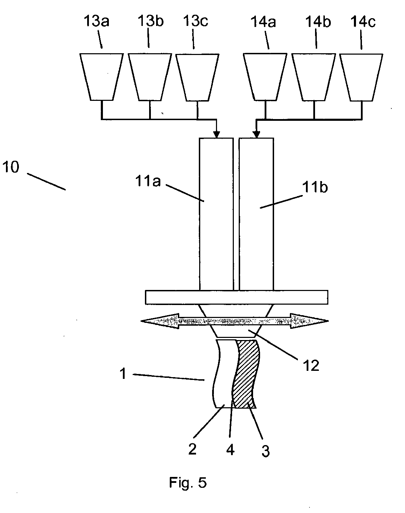

Ein mögliches Verfahren zur Herstellung des erfindungsgemäßen WC-Reinigungsprodukts wird nachfolgend, auch anhand der Fig. 5-8, näher erläutert.

Grundsätzlich sind Extrusionsverfahren zur Herstellung von WC-Reinigungsprodukten aus dem Stand der Technik bekannt, so dass es an dieser Stelle für den Fachmann keiner weiteren Erläuterung dieses Prozesses bedarf.

Grundsätzlich umfasst das Verfahren zur Herstellung der erfindungsgemäßen streifenförmigen, mehrphasigen WC-Reinigungsprodukte bestehend aus mindestens zwei Phasen, die folgenden Schritte:
a) Mischen der Komponenten jeweils für die einzelnen Phasen,
b) Extrusion der einzelnen Stränge für die verschiedenen Phasen,
c) Zusammenführen der einzelnen Stränge in einer gemeinsamen Düse oder jeweils separaten Düsen, so dass eine Kontaktfläche zwischen den Strängen gebildet ist,
wobei die Düse bzw. die Düsen eine oszillatorische, bevorzugt eine linear oszillatorische, ganz besonders bevorzugt eine harmonisch oszillatorische Bewegung ausführt bzw. ausführen.

Ein, wie in Fig. 5 dargestelltes, bevorzugtes Verfahren zur Herstellung streifenförmiger, mehrphasiger WC-Reinigungsprodukte bestehend aus mindestens zwei Phasen, umfasst die Schritte:
a) Mischen der Komponenten jeweils für die einzelnen Phasen
b) Extrusion der einzelnen Stränge 2,3 für die verschiedenen Phasen,
c) Zusammenführen der einzelnen Stränge in einer Düse 12, so dass eine Kontaktfläche 4 zwischen den Strängen 2,3 gebildet ist, wobei die Düse 12 eine oszillatorische, bevorzugt eine linear oszillatorische, ganz besonders bevorzugt eine harmonisch oszillatorische Bewegung ausführt.

Die einzelnen Rezepturbestandteile der beiden Phasen werden in den entsprechenden Vorratsbehältern 13a-c für die erste Phase und in den Vorratsbehältern 14a-c für die zweite Phase vorgehalten und in den gewünschten Mischungsverhältnissen einem Extruder 11a für die erste Phase und einem Extruder 11 b für die zweite Phase zugeführt. Am Ausgang der Extruder 11a,11b ist eine Düse 12 angeordnet, in der die beiden extrudierten Stränge 2,3 zusammengeführt und über eine gemeinsame Öffnung abgegeben werden. Die Zusammenführung ist dabei so gestaltet, dass sich eine Kontaktfläche 4 zwischen den Strängen 2,3 ausbildet. Wie durch den Pfeil über der Düse 12 angedeutet, vollzieht die Düse eine oszillatorische, bevorzugt eine linear oszillatorische, ganz besonders bevorzugt eine harmonisch oszillatorische Bewegung, so dass das WC-Reinigungsprodukt eine wellenförmige Grundform wie in Fig. 5 dargestellt annimmt.

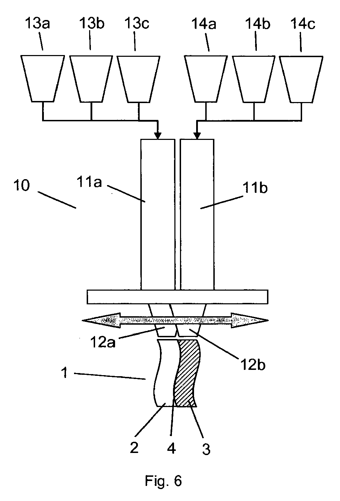

Ein weiteres, bevorzugtes Verfahren zur Herstellung streifenförmiger, mehrphasiger WC-Reinigungsprodukte bestehend aus mindestens zwei Phasen, welches in Fig. 6 abgebildet ist, umfasst die Schritte:
a) Mischen der Komponenten jeweils für die einzelnen Phasen
b) Extrusion der einzelnen Stränge 2,3 für die verschiedenen Phasen,
c) Zusammenführen der einzelnen Stränge 2,3 in jeweils einer separaten Düse 12a,12b , wobei die Düsen 12a,12b derart zueinander angeordnet und ausgebildet sind, dass eine Kontaktfläche 4 zwischen den Strängen 2,3 gebildet ist, wobei die Düsen 12a, 12b eine zeitgleiche oszillatorische, bevorzugt eine linear oszillatorische, ganz besonders bevorzugt eine harmonisch oszillatorische Bewegung ausführen.

Im Gegensatz zu dem aus Fig. 5 gezeigten Verfahren, weist das Verfahren gemäß Fig. 6 keine gemeinsame Düse für beide Extruder 11a,11b auf, sondern jeder Extruder 11a,11b verfügt über seine eigene Abgabedüse 12a,12b für den jeweiligen Extrusionsstrang 2,3. Die Düsen 12a, 12b weisen bevorzugt eine aufeinander zugewandte Orientierung auf, so dass die Extrusionsstränge 2,3 eine hinreichend gute Kontaktfläche 4 ausbilden können.

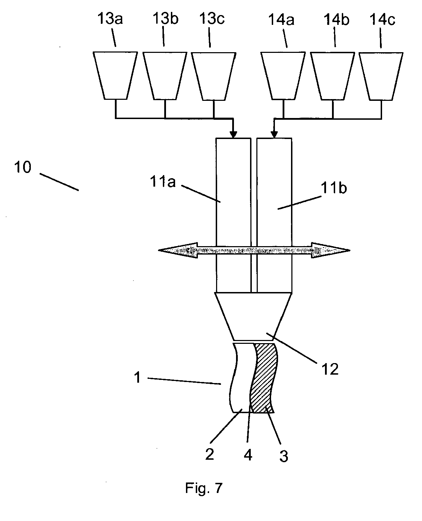

Fig. 7 zeigt ein weiteres, bevorzugtes Verfahren zur Herstellung streifenförmiger, mehrphasiger WC-Reinigungsprodukte bestehend aus mindestens zwei Phasen, umfassend die Schritte:
a) Mischen der Komponenten jeweils für die einzelnen Phasen
b) Extrusion der einzelnen Stränge 2,3 für die verschiedenen Phasen,
c) Zusammenführen der einzelnen Stränge 2,3 in einer Düse 12, so dass eine Kontaktfläche 4 zwischen den Strängen 2,3 gebildet ist, wobei die Extruder 11a,11b mit der Düse 12 eine zeitgleiche oszillatorische, bevorzugt eine linear oszillatorische, ganz besonders bevorzugt eine harmonisch oszillatorische Bewegung ausführen.

Im Gegensatz zu den aus den Fig. 5-6 bekannten Verfahrensvarianten, ist die Düse 12 fest mit den Extrudern 11a,11b verbunden, wobei die Extruder 11a,11b und die Düse 12 eine zeitgleiche oszillatorische, bevorzugt eine linear oszillatorische, ganz besonders bevorzugt eine harmonisch oszillatorische Bewegung ausführen, was durch den Pfeil über den Extrudern 11a,11 b angedeutet ist.

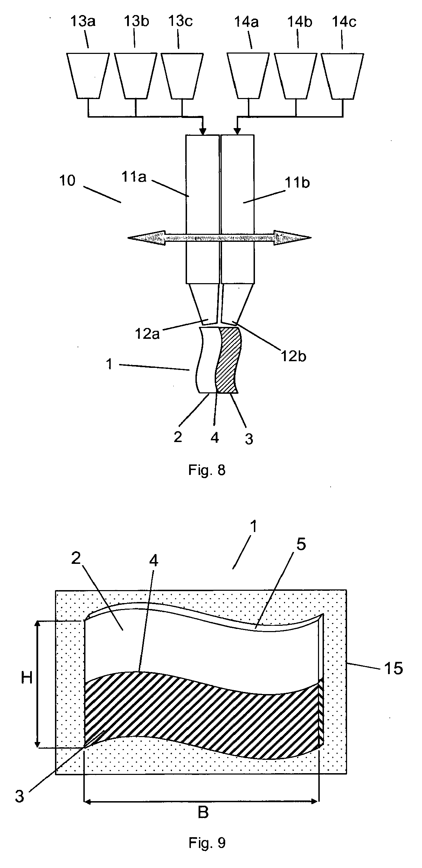

Schließlich ist es - wie in Fig. 8 gezeigt - auch möglich, dass die aus Fig. 7 bekannte Anordnung bzw. Verfahren mit zwei voneinander separierten Düsen 12a, 12b versehen wird, so dass es sich hierbei dann um eine Kombination der aus Fig. 6 und Fig. 7 bekannten Anordnungen bzw. Verfahren handelt.

Die extrudierten Stränge 2,3 des streifenförmigen Reinigungsproduktes 1 werden auf ein Ablageband appliziert, welches nicht explizit in den Fig. 5-8 dargestellt ist. Das Ablageband bewegt sich bevorzugt in einer Geschwindigkeit, die der Austrittsgeschwindigkeit der Extrusionsstränge 2,3 aus der bzw. den Düse(n) entspricht, so dass eine Streckung oder Stauchung der extrudierten Stränge bei der Applikation auf das Ablageband vermieden wird.

Selbstverständlich ist es auch denkbar, die Geschwindigkeit des Ablagebands so einzustellen, dass eine gewünschte Streckung der extrudierten Stränge bewirkt wird.

Alternativ zu den oben genannten Verfahrensvarianten, bei denen das Ablageband auf das die Stränge 2,3 aus der oder den Düse(n) 12,12a,12b appliziert werden außer in Extrusionsrichtung starr ist, ist es jedoch auch möglich, dass der Extruderkopf bzw. die Düse starr, jedoch das Ablageband auf dem das streifenförmige Reinigungsprodukt nach dem Austritt aus der bzw. den Düsen appliziert wird, eine oszillatorische, bevorzugt eine linear oszillatorische, ganz besonders bevorzugt eine harmonisch oszillatorische Bewegung ausführt, so dass ein wellenförmiges WC-Reinigungsprodukt wie vorab beschrieben ausgebildet wird.

Es ist bevorzugt, dass der Extruder als Walzenextruder, insbesondere mit Riffelwalzen, ausgebildet ist.

Es ist des Weiteren vorteilhaft, die aus der Düse bzw. den Düsen ausgetretenen, streifenförmige, mehrphasige WC-Reinigungsprodukte zu kühlen und im gekühlten Zustand zu schneiden, wodurch Anhaftungen am Schneidewerkzeug vermieden werden und glatte Schnittkanten am WC-Reinigungsprodukt ausgebildet werden können. Ferner lassen sich die WC-Reinigungsprodukte im gekühlten Zustand besser vom Ablageband lösen.

Es ist besonders bevorzugt, dass das extrudierte WC-Reinigungsprodukt vor dem Schneiden auf eine Temperatur zwischen -10°C und +15°C, ganz besonders bevorzugt zwischen -5°C und +10°C, insbesondere bevorzugt zwischen 0°C und 10°C herunter gekühlt wird.

Ferner ist es vorteilhaft, die Innenseite einer Düse mit einer Anti-Haft-Beschichtung, wie z.B. Teflon, zu versehen.

Die Oberfläche des Ablagebandes, auf das das streifenförmige WC-Reinigungsprodukt extrudiert wird, ist vorteilhafterweise silikonisiert, so dass Produktanhaftungen minimiert oder gänzlich vermieden werden.

Es ist an dieser Stelle darauf hinzuweisen, dass bevorzugt kein separates Klebemittel zum Verkleben der Extrudatphasen eingesetzt wird. Die stoffschlüssige Verbindung zwischen den Extrudatphasen erfolgt alleinig aufgrund der Adhäsionseigenschaften der Extrudatphasen und deren mechanische Zusammenführung durch die Düsen.

### Verpackung des streifenförmigen WC-Reinigungsprodukts

Bevorzugt ist ein streifenförmiges WC-Reinigungsprodukt in einem Einzeldosierbeutel bevorratet, wobei eine Mehrzahl dieser Einzeldosierbeutel in einem weiteren Vorratsbehältnis, wie beispielsweise einer Kunststoff-Box oder Kartonschachtel, bevorratet sind.

Ein Einzeldosierbeutel ist insbesondere ein Folienbeutel gebildet aus einer Kunststofffolie, die das Streifenförmige WC-Reinigungsprodukt im geschlossenen Zustand des Beutels vollständig umschließt. Eine entsprechende Konfiguration ist beispielhaft in Fig. 9 wiedergegeben.

Fig. 9 zeigt das aus Fig.1 bekannte WC-Reinigungsprodukt, wobei dieses auf der Beutelfolie 15 eines nicht verschlossenen Einzeldosierbeutels anhaftet.

Üblicherweise ist am Einzeldosierbeutel an wenigstens einem Seitenrand des Beutels eine Verschlussnaht, z.B. eine Siegelnaht, wie eine Heiss- oder Kaltsiegelnaht, Schweißnaht oder Klebnaht ausgeformt. Je nach Art und Weise der Herstellung können beispielsweise Flachbeutel drei oder vier Siegelnähte entsprechend an drei oder vier Seitenkanten aufweisen. Ein Schlauchbeutel wiederum kann eine obere und eine gegenüberliegende, untere Quernaht oder eine obere und eine untere Quernaht und eine Rumpfnaht, wie eine überlappende oder gefalzte Rumpfnaht, aufweisen.

Da sich die gesiegelten oder verschweißten Nähte nur schwer aufreißen lassen, ist es vorteilhaft, bei derartigen Beutelverpackungen das Aufreißen beispielsweise durch eine Kerbe an einer der die Verpackung schließenden Schweißnähte zu erleichtern. Diese Kerbe soll die Rissbeständigkeit der Schweiß- bzw. Siegelnähte verringern, so dass die Beutelverpackung durch Aufreißen ohne Verwendung eines zusätzlichen Werkzeugs, wie beispielsweise eine Schere, geöffnet werden kann.

Der Aufreißvorgang findet üblicherweise längs einer Aufreißlinie statt, entlang welcher der Einzeldosierbeutel zumindest abschnittsweise in wenigstens zwei Teile getrennt wird und welche wenigstens abschnittsweise durch den Füllraum des Beutels führt. Das WC-Reinigungsprodukt kann anschließend durch die entstandene Öffnung in der Verpackung in beliebiger Weise entnommen werden.

Alternativ ist es auch möglich, dass der Einzeldosierbeutel eine versetzte Rückennaht aufweist, wobei der Versatz vorzugsweise zwischen 3-10 mm beträgt. Durch diesen Versatz kann der Benutzer die beiden Folienenden längs der Rückennaht greifen und auseinander ziehen, so dass sich der Einzeldosierbeutel über seine gesamte Rückennaht öffnen lässt. In diesem Fall ist eine abziehbare, mehrschichtige Folie (peelable foil) zu bevorzugen, welche innenseitig aus PE und außenseitig aus einer metallisierten PET-Folie gebildet ist. Ganz besonders bevorzugt ist es, dass die abziehbare, mehrschichtige Folie aus einer 20-70 µm starken abziehbaren PE-Folie und einer 10-20 µm starken metallisierten PET-Schicht aufgebaut ist.

Der Einzeldosierbeutel ist vorzugsweise aus einem flexiblen Kunststoffmaterial gefertigt. Besonders bevorzugt ist es, den Beutel aus einer mono- oder biaxial orientierten PP-Folie herzustellen. Generell sind beliebige Kunststoffe bevorzugt, die eine ausgeprägte Orientierung, beispielsweise durch Recken, aufweisen, so dass sie sich leicht und gradlinig spleißen lassen.

Insbesondere ist das Folienmaterial wasserdampfundurchlässig. Das Folienmaterial kann auch wärmeschrumpfbar ausgeführt sein.

Es ist bevorzugt, den Einzeldosierbeutel aus mehrlagigem Verpackungsmaterial zu fertigen. Die einzelnen Materiallagen können Lackaufträge, Folien aus Metallen, metallisierte Schichten oder Folien aus Kunststoffen, insbesondere thermoplastischen Kunststoffen oder Verbunde aus Metallfolien und Kunststofffolien sein. Eine oder mehrere Materiallagen können extrudierte und insbesondere schmelzextrudierte, Schichten oder Filme aus thermoplastischen Kunststoffen, fallweise im Verbund mit Folien aus Metallen oder Kunststoffen darstellen. Wenigstens eine Materiallage kann ein Lackauftrag, wie ein Klarlack, eine Farblackierung, eine Hotmeltbeschichtung usw. sein. Wenigstens eine Materiallage kann eine metallisierte Schicht oder eine aus dem Vakuum abgeschiedene keramische Dünnschicht sein.

Die Materiallagen aus thermoplastischen Kunststoffen können transparent, durchscheinend oder opak sein. Die Materiallagen, insbesondere die an einer Verpackung in äußerster Lage angeordneten Materiallagen, Folien oder Schichten, können eine Bedruckung aufweisen.

Die Wanddicke der Verpackungsfolie beträgt beispielsweise 10-500 µm, vorzugsweise 30 bis 300 µm, insbesondere 35 bis 150 µm.

Als Folien aus Metall kommen beispielsweise Stahlfolien und vorzugsweise Aluminiumfolien zur Anwendung. Die Dicke der Folien kann beispielsweise von 5 bis 100 µm, vorzugsweise von 8 bis 45 µm, insbesondere von 10 bis 35 µm, betragen.

Geeignete Folien aus Kunststoffen sind zweckmässig aus thermoplastischen Kunststoffen, wie Polyestern, Polyolefinen, z.B. Polypropylene oder Polyethylene, oder wie Polyamiden, Polyvinylchlorid, Polycarbonat oder aus cellulosehaltigen Materialien, wie Cellophan oder Papier. Die Folien aus Kunststoff können als Monofolien oder Folienverbunde vorliegen. Die Dicke der Folien aus Kunststoffen kann beispielsweise von 8 bis 100 µm, vorzugsweise von 12 bis 35 µm, und insbesondere 12 bis 23 µm, betragen.

Extrudierte oder schmelzextrudierte Schichten können beispielsweise aus Polyolefinen, wie Polypropylenen oder Polyethylenen sein. Die Dicke der Extrudate kann beispielsweise von 8 bis 100 µm, vorzugsweise von 12 bis 30 µm und insbesondere 12 bis 23 µm, betragen.

Das streifenförmige WC-Reinigungsprodukt haftet mit wenigstens einer Flachseite an der Inneren Oberfläche des Einzeldosierbeutels an. Die Adhäsion des WC-Reinigerprodukts an der inneren Oberfläche des Beutels ist dabei geringer als die Adhäsion des WC-Reinigerprodukts auf einer keramischen Oberfläche im Inneren eines Toilettenbeckens, so dass das WC-Reinigungsprodukt, wenn es in das Innere eines Toilettenbeckens appliziert wird, zum einen auf der keramischen Oberfläche haften bleibt und sich die Beutelfolie leicht vom WC-Reinigungsprodukt abziehen lässt. Dies hat den Vorteil, dass der Benutzer während des Applikationsvorgangs keinen Hautkontakt mit dem WC-Reinigungsprodukt erhält, da der geöffnete Einzelportionsbeutel das WC-Reinigungsprodukt während des Applikationsvorganges von der Hand des Benutzers trennt. Um dies zu verdeutlichen, wird der Applikationsvorgang nachfolgend näher beschrieben.

Zunächst entnimmt der Benutzer einen Einzeldosierbeutel, der mit dem WC-Reinigungsprodukt gefüllt ist. Zur Applikation des WC-Reinigungsprodukts öffnet der Benutzer den Einzeldosierbeutel wobei das WC-Reinigungsprodukt auf einer Innenseite des Beutels haften bleibt und sich nicht von der Oberfläche löst und herausfällt. Der Benutzer hält den Einzeldosierbeutel und drückt damit das WC-Reinigungsproduckt an die Toilettenoberfläche, so dass kein Kontakt zwischen der Hand des Benutzers und dem WC-Reinigungsprodukt ausgebildet wird. Schließlich zieht der Benutzer den Einzeldosierbeutel vom auf der Toilettenoberfläche anhaftenden WC-Reinigungsprodukt ab und entsorgt den Beutel.

Um das streifenförmige WC-Reinigungsprodukt lösbar an die Innenseite des Einzeldosierbeutels anzuhaften, wird das WC-Reinigungsprodukt oder die die entsprechende Seite des Einzeldosierbeutels mit einem Anpressdruck zwischen 5-15 N/cm², bevorzugt zwischen 7-10 N/cm² bei 20°C beaufschlagt. Hierdurch wird gewährleistet, dass das WC-Reinigungsprodukt hinreichend lösbar an der Folie des Einzeldosierbeutels haftet, so dass ein ungewünschtes ablösen des WC-Reinigungsprodukts von der Folie beim Öffnen des Einzeldosierbeutels verhindert wird.

## Patentansprüche

1. Streifenförmiges WC-Reinigungsprodukt (1) zur Applikation im Inneren eines Toilettenbeckens umfassend
• Eine Breite (B), eine Höhe (H) und eine Stärke (S), wobei das Verhältnis zwischen Breite (B), Höhe (H) und Stärke (S) zwischen 1:1:0,01 und 1:0,1:0,2 liegt,
• eine erste extrudierte Phase (2) und
• wenigstens eine zweite extrudierte Phase (3), wobei die erste Phase (2) von wenigstens der zweiten Phase (3) verschieden ist, wobei jedoch alle Phasen (2,3,7) wenigstens einen Haftvermittler zumindest auf der auf das Toilettenbecken zu applizierenden Seite des WC-Reinigungsprodukts (1) umfassen und
• die erste Phase (2) und wenigstens die zweite Phase (3) eine Kontaktfläche (4) miteinander aufweisen wobei
• wenigstens die Kontur einer Kontaktfläche (4, 4a,4b) entlang der Mittelachse (8) in Form einer sinusartigen Welle ausgebildet ist, die eine Amplitude von A_{1,O} aufweist, wobei das Verhältnis von Amplitude zur Breite (B) A_{1,O}:B zwischen 1:10 und 1:25 beträgt und die Periodenlänge der sinusartigen Welle 0,1-1 mal der Breite (B) des WC-Reinigerprodukts (1) entspricht.

2. Streifenförmiges WC-Reinigungsprodukt (1) nach Anspruch 1, **dadurch gekennzeichnet, dass** die erste Phase (2) und die wenigstens zweite Phase (3) die gleiche Breite (B) aufweisen.

3. Streifenförmiges WC-Reinigungsprodukt (1) nach einem der vorherigen Ansprüche, **dadurch gekennzeichnet, dass** die erste Phase (2) und wenigstens die zweite Phase (3), bevorzugt alle Phasen (2,3,7) im wesentlichen die gleiche Höhe (H₁,H₂,H₃) aufweisen.

4. Streifenförmiges WC-Reinigungsprodukt (1) nach einem der vorherigen Ansprüche, **dadurch gekennzeichnet, dass** die erste Phase (2) und wenigstens die zweite Phase (3), bevorzugt alle Phasen (2,3,7) im wesentlichen die gleiche Stärke (s) aufweisen.

5. Streifenförmiges WC-Reinigungsprodukt (1) nach einem der vorherigen Ansprüche, **dadurch gekennzeichnet, dass** die beiden das WC-Reinigungsprodukt (1) begrenzenden Breitenseiten (5,6) eine Kontur aufweisen, die im Wesentlichen der Kontur der Kontaktfläche (4) entspricht.

6. Streifenförmiges WC-Reinigungsprodukt (1) nach einem der vorherigen Ansprüche, **dadurch gekennzeichnet, dass** dem WC-Reinigungsprodukt (1) wenigstens ein Haftvermittler zugesetzt ist, insbesondere ein Ester der Polyisobutenbernsteinsäure.

7. Streifenförmiges WC-Reinigungsprodukt (1) nach einem der vorherigen Ansprüche, **dadurch gekennzeichnet, dass** es mindestens ein Tensid enthält.

8. Streifenförmiges WC-Reinigungsprodukt (1) nach Anspruch 7, **dadurch gekennzeichnet, dass** das mindestens eine Tensid vorzugsweise ausgewählt ist aus der Gruppe der nichtionischen Tenside, der anionischen Tenside sowie Gemischen derselben.

9. Streifenförmiges WC-Reinigungsprodukt (1) nach einem der vorherigen Ansprüche, **dadurch gekennzeichnet, dass** es weitere, üblicherweise in WC-Reinigungsprodukten enthaltene Inhaltsstoffe enthält, vorzugsweise ausgewählt aus der Gruppe umfassend Säuren, Basen, Salze, Verdickungsmittel, antimikrobielle Wirkstoffe, Konservierungsstoffe, Komplexbildner, Bitterstoffe, Polymere, Farbstoffe, Duftstoffe, Parfümbooster, Füllstoffe, Builder, Bleichmittel, Korrosionsinhibitoren, Abspülregulatoren, Enzyme, Mikroorganismen, Wirkstoffe zur Biofilmentfernung, Wirkstoffe zur Inhibierung der Kalkablagerung, Wirkstoffe zur Verminderung der Schmutzhaftung, Wirkstoffe zur Verbesserung der Verarbeitbarkeit sowie Gemische derselben.

10. Streifenförmiges WC-Reinigungsprodukt (1) nach einem der vorherigen Ansprüche, **dadurch gekennzeichnet, dass** das WC-Reinigungsprodukt (1) wenigstens einen Haftvermittler in Form eines ein- oder zweiseitigen Klebestreifens oder eines flächig oder punktuell aufgetragenen Klebstoffs umfasst, der auf der Seite des WC-Reinigungsprodukts (1) angeordnet ist, welche im Inneren des Toilettenbeckens appliziert wird.

11. Verfahren zur Herstellung streifenförmiger, mehrphasiger WC-Reinigungsprodukte, insbesondere eines streifenförmigen WC-Reinigungsprodukts nach einem der Ansprüche 1-10, bestehend aus mindestens zwei Phasen, umfasst die Schritte:
a) Mischen der Komponenten jeweils für die einzelnen Phasen,
b) Extrusion der einzelnen Stränge für die verschiedenen Phasen,
c) Zusammenführen der einzelnen Stränge in einer gemeinsamen Düse oder jeweils separaten Düsen, so dass eine Kontaktfläche zwischen den Strängen gebildet ist, wobei die Düse bzw. die Düsen eine oszillatorische, bevorzugt eine linear oszillatorische, ganz besonders bevorzugt eine harmonisch oszillatorische Bewegung ausführt bzw. ausführen.

12. Verfahren zur Herstellung streifenförmiger, mehrphasiger WC-Reinigungsprodukte, insbesondere eines streifenförmigen WC-Reinigungsprodukts nach einem der Ansprüche 1-10, bestehend aus mindestens zwei Phasen, umfasst die Schritte:
a) Mischen der Komponenten jeweils für die einzelnen Phasen
b) Extrusion der einzelnen Stränge für die verschiedenen Phasen,
c) Zusammenführen der einzelnen Stränge in einer gemeinsamen Düse oder jeweils separaten Düsen, so dass eine Kontaktfläche zwischen den Strängen gebildet ist, wobei die Extruder mit der Düse bzw. Düsen eine zeitgleiche oszillatorische, bevorzugt eine linear oszillatorische, ganz besonders bevorzugt eine harmonisch oszillatorische Bewegung ausführen.

13. Einzeldosierbeutel bevorratend ein streifenförmiges WC-Reinigungsprodukt nach einem der Ansprüche 1-10, **dadurch gekennzeichnet, dass** das streifenförmige WC-Reinigungsprodukt mit wenigstens einer Flachseite an der inneren Oberfläche des Einzeldosierbeutels anhaftet, wobei die Adhäsion des WC-Reinigerprodukts an der inneren Oberfläche des Beutels geringer ist als die Adhäsion des WC-Reinigerprodukts auf einer keramischen Oberfläche im Inneren eines Toilettenbeckens.

## Claims

1. A strip-shaped toilet cleaning product (1) for application in the interior of a toilet bowl, comprising:
• a width (B), a height (H) and a thickness (S), wherein the ratio of the width (B), height (H) and thickness (S) is between 1:1:0.01 and 1:0.1:0.2,
• a first extruded phase (2) and
• at least one second extruded phase (3), wherein the first phase (2) differs from at least the second phase (3), wherein however all the phases (2, 3, 7) comprise at least one adhesion promoter at least on the side of the toilet cleaning product (1) to be applied onto the toilet bowl and
• the first phase (2) and at least the second phase (3) have a contact surface with one another, wherein
• at least the contour of a contact surface (4, 4a, 4b) along the center axis (8) is designed in the form of a sine wave having an amplitude of A_{1,O}, wherein the ratio of the amplitude to the width (B) A_{1,O}:B is between 1:10 and 1:25, and the period of the sine wave corresponds to 0.1 to 1 times the width (B) of the toilet cleaning product (1).

2. The strip-shaped toilet cleaning product (1) according to claim 1, **characterized in that** the first phase (2) and the at least second phase (3) have the same width (B).

3. The strip-shaped toilet cleaning product (1) according to any one of the preceding claims, **characterized in that** the first phase (2) and at least the second phase (3), preferably all phases (2, 3, 7), have substantially the same height (H₁, H₂, H₃).

4. The strip-shaped toilet cleaning product (1) according to any one of the preceding claims, **characterized in that** the first phase (2) and at least the second phase (3), preferably all phases (2, 3, 7), have substantially the same thickness (S).

5. The strip-shaped toilet cleaning product (1) according to any one of the preceding claims, **characterized in that** the two widthwise sides (5, 6) delimiting the toilet cleaning product (1) have a contour that substantially corresponds to the contour of the contact surface (4).

6. The strip-shaped toilet cleaning product (1) according to any one of the preceding claims, **characterized in that** at least one adhesion promoter is added to the toilet cleaning product (1), in particular an ester of polyisobutene succinic acid.

7. The strip-shaped toilet cleaning product (1) according to any one of the preceding claims, **characterized by** comprising at least one surfactant.

8. The strip-shaped toilet cleaning product (1) according to claim 7, **characterized in that** the at least one surfactant is preferably selected from the group of nonionic surfactants, anionic surfactants and mixtures thereof.

9. The strip-shaped toilet cleaning product (1) according to one of the preceding claims, **characterized by** comprising further ingredients typically present in toilet cleaning products, preferably selected from the group consisting of acids, bases, salts, thickeners, active antimicrobial agents, preservatives, complexing agents, bittering agents, polymers, dyes, odorants, perfume boosters, fillers, builders, bleaching agents, corrosion inhibitors, disintegration rate regulators, enzymes, microorganisms, active agents for biofilm removal, active agents to inhibit lime scale build-up, active agents to reduce dirt adhesion, active agents to improve processability and mixtures thereof.

10. The strip-shaped toilet cleaning product (1) according to any one of the preceding claims, **characterized in that** the toilet cleaning product (1) comprises at least one adhesion promoter in the form of a single- or double-sided adhesive strip or an adhesive applied areally or in spots, which is arranged on the side of the toilet cleaning product (1), which is applied in the interior of the toilet bowl.

11. A method for producing strip-shaped, multi-phase toilet cleaning products, in particular a strip-shaped toilet cleaning product according to any one of claims 1 to 10, consisting of at least two phases, comprising the following steps:
a) mixing the respective components for the individual phases;
b) extruding the individual strands for the various phases;
c) bringing the individual strands together in a shared die, or in respective separate dies, so that a contact surface is formed between the strands, wherein the die carries out, or the dies carry out, an oscillatory, preferably a linear oscillatory, especially particularly preferably a harmonic oscillatory, movement.

12. A method for producing strip-shaped, multi-phase toilet cleaning products, in particular a strip-shaped toilet cleaning product according to any one of claims 1 to 10, consisting of at least two phases, comprising the following steps:
a) mixing the respective components for the individual phases;
b) extruding the individual strands for the various phases;
c) bringing the individual strands together in a shared die, or in respective separate dies, so that a contact surface is formed between the strands, wherein the extruders carry out a simultaneous oscillatory, preferably a linear oscillatory, especially particularly preferably a harmonic oscillatory, movement with the die or dies.

13. An individually metered pouch storing the strip-shaped toilet cleaning product according to any one of claims 1 to 10, **characterized in that** the strip-shaped toilet cleaning product adheres with at least one flat side to the inner surface of the individually metered pouch, the adhesion of the toilet cleaning product to the inner surface of the pouch being lower than the adhesion of the toilet cleaning product to a ceramic surface in the interior of a toilet bowl.

## Revendications

1. Produit de nettoyage de toilettes (1) en forme de bande, destiné à être appliqué à l'intérieur d'une cuvette de toilettes, ayant
• une largeur (B), une hauteur (H) et une épaisseur (S), le rapport entre la largeur (B), la hauteur (H) et l'épaisseur (S) étant compris entre 1;1;0,01 et 1:0,1:0,2,
• une première phase extrudée (2) et
• au moins une deuxième phase extrudée (3), la première phase (2) étant différente de l'au moins une deuxième phase (3), mais inclut toutes les phases (2, 3, 7) comportant cependant au moins un promoteur d'adhérence au moins du côté du produit de nettoyage de toilettes (1) qui doit être appliqué sur la cuvette des toilettes, et
• la première phase (2) et l'au moins une deuxième phase (3) ayant une surface de contact mutuel (4),
• au moins le contour d'une surface de contact (4, 4a, 4b) le long de l'axe central (8) se présentant sous la forme d'une onde sinusoïdale d'amplitude A_{1.O}, le rapport A_{1.O}:B de l'amplitude sur la largeur (B) étant compris entre 1:10 et 1:25 et la période de l'onde sinusoïdale étant de 0,1 à 1 fois la largeur (B) du produit de nettoyage de toilettes (1).

2. Produit de nettoyage de toilettes (1) en forme de bande selon la revendication 1, **caractérisé en ce que** la première phase (2) et l'au moins une deuxième phase (3) ont la même largeur (B).

3. Produit de nettoyage de toilettes (1) en forme de bande selon l'une quelconque des revendications précédentes, **caractérisé en ce que** la première phase (2) et l'au moins une deuxième phase (3), de préférence toutes les phases (2, 3, 7), ont sensiblement la même hauteur (H₁, H₂, H₃).

4. Produit de nettoyage de toilettes (1) en forme de bande selon l'une des revendications précédentes, **caractérisé en ce que** la première phase (2) et l'au moins une deuxième phase (3), de préférence toutes les phases (2, 3, 7) ont sensiblement la même épaisseur (6).

5. Produit de nettoyage de toilettes (1) en forme de bande selon l'une des revendications précédentes, **caractérisé en ce que** les deux côtés en largeur (5, 6) définissant le produit de nettoyage de toilettes (1) présentent un contour qui correspond sensiblement au contour de fa surface de contact (4).

6. Produit de nettoyage de toilettes (1) en forme de bande selon l'une des revendications précédentes, **caractérisé en ce que** le produit de nettoyage de toilettes (1) est additionné d'au moins un promoteur d'adhérence, en particulier un ester de l'acide polyisobutène-succinique.

7. Produit de nettoyage de toilettes (1) en forme de bande selon l'une des revendications précédentes, **caractérisé en ce qu'**il contient au moins un tensioactif.

8. Produit de nettoyage des toilettes (1) en forme de bande selon la revendication 7, **caractérisé en ce que** l'au moins un tensio-actif est de préférence choisi dans le groupe comportant les tensioactifs non ioniques, les tensioactifs anioniques et leurs mélanges.

9. Produit de nettoyage de toilettes (1) en forme de bande selon l'une des revendications précédentes, **caractérisé en ce qu'**il contient d'autres ingrédients, contenus habituellement dans les produits de nettoyage de toilettes, de préférence choisis dans le groupe comportant les acides, les bases, les sels, les épaississants, les agents antimicrobiens, les agents de conservation, les agents complexants, les agents d'amertume, les polymères, les colorants, les parfums, les renforçateurs de parfum, les charges, les adjuvants, les agents de blanchiment, les inhibiteurs de corrosion, les régulateurs de lavage, les enzymes, les microorganismes, les substances actives pour l'élimination du biofilm, les agents d'inhibition de la calcification, les agents de réduction de l'adhérence des souillures, les agents d'amélioration de l'aptitude au façonnage et leurs mélanges.

10. Produit de nettoyage de toilettes (1) en forme de bande selon l'une des revendications précédentes, **caractérisé en ce que** le produit de nettoyage de toilettes (1) comprend au moins un promoteur d'adhérence se présentant sous la forme d'un ruban adhésif à un ou deux côtés ou d'un adhésif appliqué ponctuellement ou sur une surface qui est disposé du côté du produit de nettoyage de toilettes (1) qui est appliqué à l'intérieur de la cuvette des toilettes.

11. Procédé de fabrication de produits de nettoyage de toilettes à phases multiples en forme de bande, en particulier de produits de nettoyage de toilettes en forme de bande selon l'une des revendications 1 à 10, constitué d'au moins deux phases, le procédé comprenant les étapes consistant à :
a) mélanger les composants pour chacune des phases individuelles,
b) extruder les barres individuelles pour les différentes phases,
c) fusionner les barres individuelles dans une buse commune ou dans chaque buse séparée de façon à former une surface de contact entre les barres, la ou les buses formant un mouvement oscillatoire, de préférence un mouvement oscillatoire linéaire, tout particulièrement un mouvement oscillatoire harmonique.

12. Procédé de fabrication de produits de nettoyage de toilettes à phases multiples en forme de bande, en particulier de produits de nettoyage de toilettes en forme de bande selon l'une des revendications 1 à 10, constitué d'au moins deux phases, le procéde comprenant les étapes consistant à :
a) mélanger les composants pour chacune des phases individuelles,
b) extruder les barres individuelles pour les différentes phases,
c) fusionner les barres individuelles dans une buse commune ou dans chaque buse séparée de façon à former une surface de contact entre les barres, la ou les buses formant un mouvement oscillatoire isochrone, de préférence un mouvement oscillatoire linéaire, tout particulièrement un mouvement oscillatoire harmonique,

13. Poche de dosage individuelle délivrant un produit de nettoyage de toilettes en forme de bande selon la revendication 1 à 10, **caractérisé en ce que** le produit de nettoyage de toilettes en forme de bande adhère par au moins une face plane à la surface intérieure de la poche de dosage individuelle, l'adhérence du produit nettoyage de toilettes à la surface intérieure de la poche étant inférieure à l'adhérence du produit de nettoyage de toilettes sur une surface céramique à l'intérieur d'une cuvette de toilettes.
